# EUROPEAN PATENT SPECIFICATION

(11) **EP 2 460 923 B1**
(45) Date of publication and mention of the grant of the patent: **03.06.2020**
(21) Application number: 11191240.8
(22) Date of filing: 30.11.2011
(51) Int. Cl.: D06F 37/26

(54) **Washing machine bearing hub**
Waschmaschinennabenlagerung
Moyeu de roulement de machine à laver

(30) Priority: 06.12.2010 ES 201031808
(43) Date of publication of application: 06.06.2012
(73) Proprietor: BSH Hausgeräte GmbH, 81739 München (DE)
(72) Inventor: Gomez Caudevilla, Miguel Angel, 50007 Zaragoza (ES); Gracia Bobed, Ismael, 50194 Zaragoza (ES); Martinez Perez, Gerardo, 50015 Zaragoza (ES); Recio Ferrer, Eduardo, 50013 Zaragoza (ES)

(56) References cited:
- EP-A1- 1 914 338
- EP-A1- 1 950 334
- EP-A1- 2 083 108
- EP-A2- 0 789 103
- WO-A2-2010/010114

## Description

The invention relates to a bearing hub for a washing machine, of a metallic material, destined to the support of a rotation axis of a drum, the bearing hub having a trunco-conicity in the direction of its axis, and having at least an outer surface with an eccentricity. The invention also relates to a washing machine comprising such bearing hub, and to a manufacturing method for a tub for such washing machine.

An example of such bearing hub is shown in document EP 2 083 108 A1, wherein the eccentricity is a knurled portion of the outer surface.

Domestic washing machines usually have a plastic tub inside which a rotating drum is mounted, into which the wash load is placed, with the drum turning on a shaft which is supported by and passes through bearings provided in a bearing hub located for this purpose within a cavity in the tub.

The plastic tubs are made by a plastic injection process, wherein the bearing hub is first positioned in the injection moulding machine, with the injection itself being performed afterward, leaving the bearing hub embedded in the plastic of the tub.

The method of injecting the tub over the bearing hub has a number of problems and disadvantages resulting from differences in types of materials, since it entails a bearing hub that is metal and a tub made of plastic material, which means materials with different contraction indices, different cooling curves and different densities. As a consequence of these differences inherent to the injection process, micro-cavities between the plastic material and the metal are created, and as a result there is a poor bond between the materials, resulting in weakening of the tub and as a consequence the possibility of cracks developing at the point where the micro-cavities or weak points occur. The long term result is that the tub often breaks in the zone where bonded to the bearing hub.

Bearing hubs of prior art, normally of stainless steel, are generally made as two inverted truncated cones oriented in opposite directions along the rotating shaft of the drum to prevent axial movement of the bearing hub relative to the plastic tub and to facilitate removal of the moulded part from the mould, and in their outer surface they have longitudinal ribs to prevent rotational movement of the bearing hub relative to the plastic of the tub. The problem is that these ribs impede the flow of plastic during injection causing micro-cavities to form which ultimately shorten the lifespan of the tub even more.

One solution is to use a better quality of plastic containing fibreglass to inject the entire tub for a better bond between the plastic and the bearing hub. However, this means a considerable and unwanted tub cost increase.

A partial solution is described in document EP 1 563 135 A1, in which a high quality plastic is used to inject, not the entire hub, but rather an intermediate body which is injected over the bearing hub and over which in turn the tub is injected.

The document WO 2010/010114 A1 describes a method that consists of making a first pre-product, which includes the bearing hub and a plastic cover that covers it laterally, and a second pre-product of plastic material, which is united with the first one to form a tub section, and in this way it is possible to employ a higher quality material for coating the bearing hub and a cheaper plastic for the remainder.

The present invention provides a solution, which in addition to preventing rotational movement of the bearing hub relative to the plastic tub, facilitates the injection process and lengthens the lifespan of the washer tub.

The present invention provides a solution to the previously mentioned problems, by means of a washing machine bearing hub and a method for manufacturing a washing machine tub according to the respective independent claim. In the dependent claims as well as in the subsequent description and in the attached drawing, preferred embodiments of the invention are defined.

The first aspect of the invention is to provide a bearing hub for a washing machine, of a metallic material, destined to the support of a rotation axis of a drum, the bearing hub having a trunco-conicity in the direction of its axis, and having at least an outer surface with an eccentricity, wherein the outer surfaces lack ribs intended to prevent rotational movement of the bearing hub relative to the plastic tub.

The outer surfaces of the bearing hub are essentially smooth. In the context of the present invention, smooth surfaces of the bearing hub shall mean surfaces that lack ribs intended to prevent rotational movement of the bearing hub relative to the plastic tub. Advantageously, due to the eccentricity on an outer surface of the bearing hub, said ribs are not needed, since the eccentricity itself prevents the rotation of the bearing hub relative to the tub.

In a preferred embodiment, the outer surfaces of the bearing hub are essentially flat.

In another preferred embodiment, the bearing hub has the eccentricity on a central portion.

In a further preferred embodiment, the eccentricity is elliptical or pyramidal. In yet another preferred embodiment, the bearing hub has very smooth corners on its outer surfaces. In the context of the present invention, very smooth corners shall mean corners that are smooth enough so that no damage is caused to the plastic of the tub when the bearing hub tries to turn relative to the plastic, and so that micro-bubbles of air are not formed during the injection of plastic to form the tub.

In yet a further preferred embodiment, the bearing hub is metal, preferably of a Zamak alloy.

A second aspect of the invention is to provide a plastic tub for a washing machine, intended to house a rotating drum and including a bearing hub according to the first aspect of the invention.

A third aspect of the invention is to provided a washing machine that includes a bearing hub according to the first aspect of the invention.

A fourth aspect of the invention is a method for manufacturing a washing machine tub that includes the provision of a bearing hub according to the first aspect of the invention in a suitable injection mould and injecting plastic around the bearing hub in order to form the tub.

In a preferred embodiment, the injection of plastic to form the tub is done directly over the bearing hub.

In an alternative preferred embodiment, the bearing hub is covered with a custom-made sleeve of a first plastic and the injection of plastic to form the tub is done over the hub provided with said sleeve, employing a second plastic for said injection, with the first plastic being of higher quality than the second in terms of stability and strength. The sleeve can be of heat-shrink plastic material that is installed over the bearing hub by means of a heating process.

Preferably, the bearing hub and the method of the invention facilitate plastic injection, eliminating micro-cavities that over the life of the washer ultimately can cause cracks in the tub through which water leaks, thereby increasing the washing machine tub's lifespan.

In order to complement the description that will be given next, and in order to help understand the characteristics of the invention better, the subsequent description is accompanied by a drawing comprising a set of figures in which preferred embodiments are shown, in an illustrative and non-limiting way: Accordingly,
Figure 1 shows a cross section of a bearing hub according to a first embodiment.
Figure 2 shows a cross section of a bearing hub according to a second embodiment.
Figures 3 and 4 show two independent portions of a sleeve for covering a bearing hub.
Figure 5 shows a sleeve formed by the two portions shown in Figures 3 and 4.
Figure 6 shows an alternative embodiment of the sleeve for covering the bearing hub.

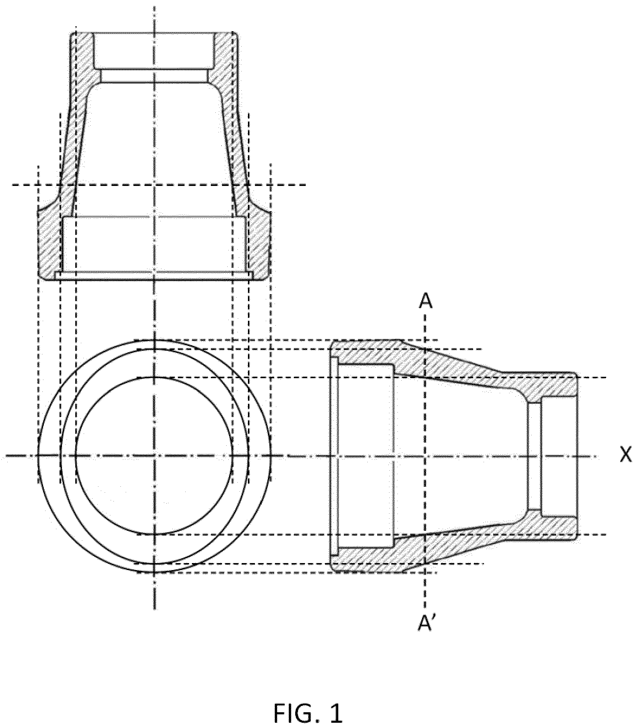

In Figure 1 there is shown a transverse cross section and two longitudinal cross sections of a bearing hub according to one embodiment. The bearing hub is formed by two truncated cones inverted relative to each other in the direction of their axis, with the longer truncated cone ending in a cylindrical portion. In addition, it has an eccentricity on its outer surface, which prevents rotational movement of the hub relative to the plastic of the tub. In the figure are shown two longitudinal cross sections of the bearing hub in perpendicular planes, as well as the transverse cross section that is seen from the point X by cutting through line A-A'. It can be seen that there is an eccentricity in the central portion of the bearing hub, on a portion of the outer surface of the longer truncated-cone portion.

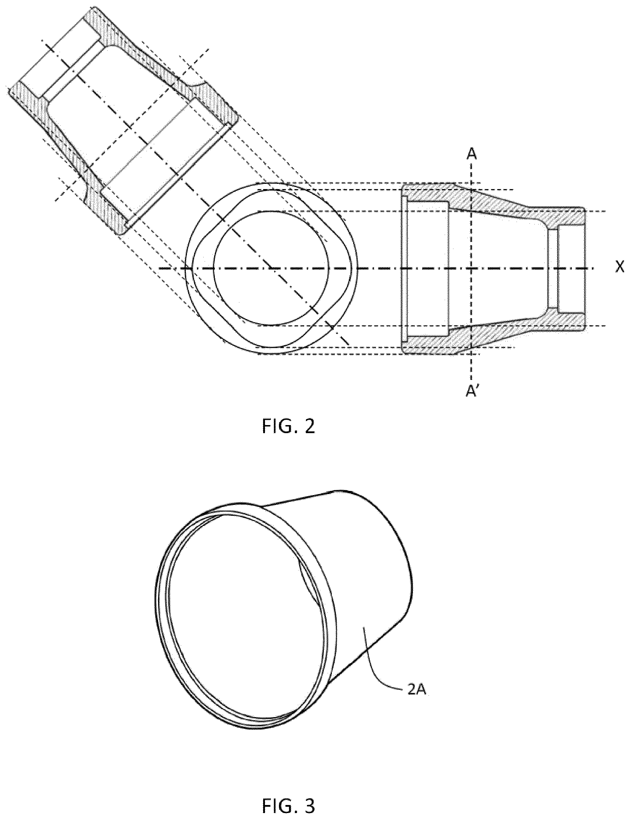

In the case of the bearing hub of Figure 1, the eccentricity is elliptical, as can be seen in the transverse cross section. In the embodiment shown in Figure 2, however, the eccentricity is pyramidal in shape, with very smooth corners that similarly achieve the anti-turn function between the bearing hub and the plastic of the tub. In this case, two longitudinal cross sections in two planes forming a 135° angle have been shown in the figure along with the transverse section visible from the point X by cutting through the A-A' plane.

With the bearing hub of the invention, the presence of ribs on the bearing hub surface is not required to prevent rotation of the bearing hub relative to the plastic of the tub. By eliminating the ribs, which impede the flow of plastic during injection, the tub manufacturing process by means of injecting plastic over the bearing hub is improved.

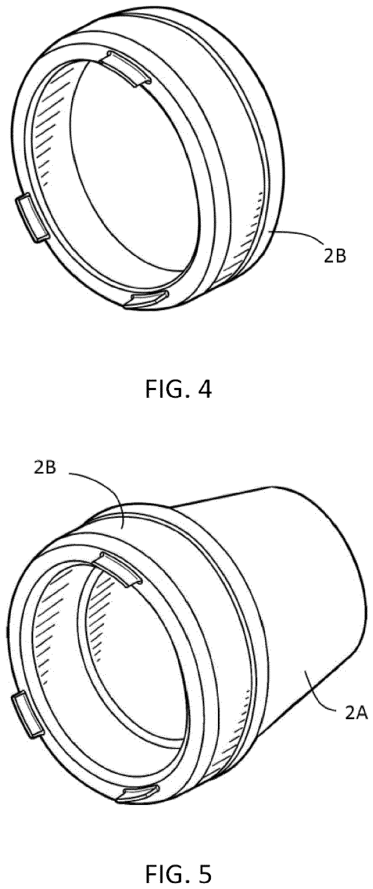

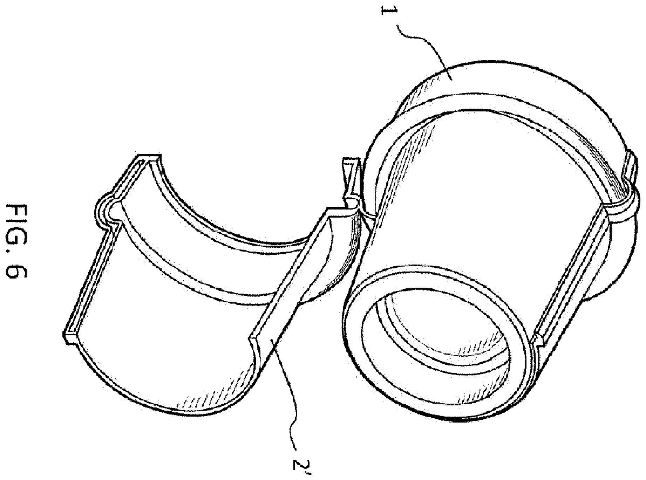

The method for manufacturing a washer tub includes placing the bearing hub according to the invention in a suitable injection mould and injecting plastic around the bearing hub in order to form the tub. As mentioned previously, the injection of plastic in order to form the tub can be done directly over the bearing hub or with the use of an intervening sleeve for covering up the bearing hub. In Figures 3 to 6 are shown two variants of embodiments of a sleeve to cover the bearing hub. In Figures 3 and 4 is shown a sleeve made in two separate portions, which are coupled together in order to house the bearing hub inside them. In Figure 5, the sleeve 2 is shown with the bearing hub inside it. In Figure 6, a second embodiment of the sleeve is shown, which includes two portions connected so as to hinge and a means of coupling provided with a narrow ridge to maintain the two portions in a closed position, which allows it to retain the bearing hub inside.

In the case of employing a sleeve as an intermediate component between the bearing hub and the tub, the plastic of the sleeve will be of higher quality than the plastic that is used to make the tub, and understood to be higher quality in terms of greater strength and stability. The first plastic, of higher quality, can contain fibreglass. The second plastic, of lower quality than the first plastic, can contain talc.

The fit between the bearing hub and the sleeve needs to be as perfect as possible for there to be no movement during operation. During the injection process, the heat of the plastic injected will cause the sleeve to tighten around the bearing hub.

Additionally, a layer of adhesive material, preferably silicone, can be applied in order to fill empty spaces between the bearing hub and the sleeve.

## Claims

1. Bearing hub (1) for a washing machine, of a metallic material, destined to be embedded in a plastic tub of the washing machine to the support of a rotation axis of a drum, the bearing hub (1) having a trunco-conicity in the direction of its axis, and having at least an outer surface with an eccentricity, **characterized in that** the outer surfaces are essentially smooth, i.e. these surfaces lack ribs intended to prevent rotational movement of the bearing hub (1) relative to the plastic tub and that the eccentricity itself prevents rotation of the bearing hub (1) relative to the tub.

2. Bearing hub (1) for a washing machine according to claim 1, **characterized in that** the outer surfaces of the bearing hub (1) are essentially flat.

3. Bearing hub (1) for a washing machine according to claim 1, **characterized in that** the bearing hub (1) has the eccentricity in a central portion.

4. Bearing hub (1) for a washing machine according to any of the preceding claims, **characterized in that** the eccentricity is elliptical or pyramidal.

5. Bearing hub (1) for a washing machine according to any of the preceding claims, **characterized in that** the bearing hub (1) has very smooth edges at its outer surfaces.

6. Bearing hub (1) for a washing machine according to any of the preceding claims, **characterized in that** the bearing hub (1) is of zamak alloy.

7. Plastic tub for a washing machine, destined to house a rotating drum and comprising a bearing hub (1) according to any of the preceding claims, for the support of the drum rotation axis.

8. Washing machine comprising a bearing hub (1) according to any of claims 1 to 6.

9. Manufacturing method of a tub for a washing machine comprising the following stages:
a. providing a bearing hub (1) according to any of claims 1 to 6 in a proper injection mould; and
b. injecting plastic around the bearing hub (1) for shaping the tub.

10. Manufacturing method of a tub for a washing machine according to claim 9, which additionally comprises covering the bearing hub (1) with a tailored coating made of a first plastic, in which the injection of plastic around the bearing hub (1) for shaping the tub is carried out on the bearing hub (1) provided with said coating, and said injection is carried out with a second plastic, the first plastic being of a higher quality than the second one in terms of stability and resistance.

11. Manufacturing method of a tub for a washing machine according to claim 10, in which the coating is made of a thermoretractable plastic.

12. Manufacturing method of a tub for a washing machine according to claim 10, in which the coating is made as an injection-moulded piece of a first plastic, which comprises fibre glass.

13. Manufacturing method of a tub for a washing machine according to claims 10 to 12, in which the second plastic comprises talc.

14. Manufacturing method of a tub for a washing machine according to any of claims 10 to 12, in which an adherent material layer is applied between the bearing hub (1) and the coating.

15. Manufacturing method of a tub for a washing machine according to any of claims 12 to 14, in which the coating comprises a sleeve with two portions (2', 2") connected in a hinged manner, and coupling means provided with a thin rib for maintaining both portions (2', 2") in a closed position, which allows to house the bearing hub (1) in its interior.

## Patentansprüche

1. Lagernabe (1) für eine Waschmaschine aus einem Metallmaterial, die zum Lagern einer Rotationsachse einer Trommel in einen Kunststofflaugenbehälter der Waschmaschine integriert werden soll, wobei die Lagernabe (1) in Richtung ihrer Achse eine Kegelstumpfform und zumindest eine Außenfläche mit einer Exzentrizität aufweist, **dadurch gekennzeichnet, dass** die Außenflächen im Wesentlichen glatt sind, d.h., diese Flächen keine Rippen aufweisen, die eine Rotationsbewegung der Lagernabe (1) in Bezug auf den Kunststofflaugenbehälter verhindern sollen, und dass die Exzentrizität selbst eine Rotation der Lagernabe (1) in Bezug auf den Laugenbehälter verhindert.

2. Lagernabe (1) für eine Waschmaschine nach Anspruch 1, **dadurch gekennzeichnet, dass** die Außenflächen der Lagernabe (1) im Wesentlichen eben sind.

3. Lagernabe (1) für eine Waschmaschine nach Anspruch 1, **dadurch gekennzeichnet, dass** die Lagernabe (1) die Exzentrizität in einem mittleren Abschnitt aufweist.

4. Lagernabe (1) für eine Waschmaschine nach einem der vorhergehenden Ansprüche, **dadurch gekennzeichnet, dass** die Exzentrizität elliptisch oder pyramidenförmig ist.

5. Lagernabe (1) für eine Waschmaschine nach einem der vorhergehenden Ansprüche, **dadurch gekennzeichnet, dass** die Lagernabe (1) an ihren Außenflächen sehr glatte Kanten aufweist.

6. Lagernabe (1) für eine Waschmaschine nach einem der vorhergehenden Ansprüche, **dadurch gekennzeichnet, dass** die Lagernabe (1) aus Zamak-Legierung besteht.

7. Kunststofflaugenbehälter für eine Waschmaschine, in dem eine rotierende Trommel untergebracht werden soll und der eine Lagernabe (1) nach einem der vorhergehenden Ansprüche zum Lagern der Trommelrotationsachse umfasst.

8. Waschmaschine mit einer Lagernabe (1) nach einem der Ansprüche 1 bis 6.

9. Fertigungsverfahren für einen Laugenbehälter einer Waschmaschine mit folgenden Schritten:
a. Bereitstellen einer Lagernabe (1) nach einem der Ansprüche 1 bis 6 in einem geeigneten Spritzgießwerkzeug und
b. Einspritzen von Kunststoff um die Lagernabe (1) herum zum Formen des Laugenbehälters.

10. Fertigungsverfahren für einen Laugenbehälter einer Waschmaschine nach Anspruch 9, das zusätzlich das Beschichten der Lagernabe (1) mit einer Spezialbeschichtung aus einem ersten Kunststoff umfasst, wobei das Einspritzen von Kunststoff um die Lagernabe (1) herum zum Formen des Laugenbehälters an der mit der Beschichtung versehenen Lagernabe (1) und mit einem zweiten Kunststoff erfolgt, wobei der erste Kunststoff im Hinblick auf Stabilität und Haltbarkeit von höherer Qualität ist als der zweite.

11. Fertigungsverfahren für einen Laugenbehälter einer Waschmaschine nach Anspruch 10, bei dem die Beschichtung aus einem durch Wärme aufschrumpfbaren Kunststoff hergestellt ist.

12. Fertigungsverfahren für einen Laugenbehälter einer Waschmaschine nach Anspruch 10, bei dem die Beschichtung als Spritzgussteil aus einem ersten Kunststoff hergestellt wird, der Glasfasern umfasst.

13. Fertigungsverfahren für einen Laugenbehälter einer Waschmaschine nach den Ansprüchen 10 bis 12, bei dem der zweite Kunststoff Talkum umfasst.

14. Fertigungsverfahren für einen Laugenbehälter einer Waschmaschine nach einem der Ansprüche 10 bis 12, bei dem zwischen der Lagernabe (1) und der Beschichtung eine anhaftende Materialschicht aufgebracht wird.

15. Fertigungsverfahren für einen Laugenbehälter einer Waschmaschine nach einem der Ansprüche 12 bis 14, bei dem die Beschichtung eine Hülse mit zwei Abschnitten (2', 2"), die auf gelenkige Weise verbunden sind, und Verbindungsmittel umfasst, die mit einer dünnen Rippe versehen sind, welche die beiden Abschnitte (2', 2") in einer geschlossenen Position hält, so dass die Lagernabe (1) darin untergebracht werden kann.

## Revendications

1. Moyeu de roulement (1) pour une machine à laver, d'un matériau métallique, destiné à être imbriqué dans une cuve en plastique de la machine à laver au support d'un axe de rotation d'un tambour, le moyeu de roulement (1) possédant une tronco-conicité dans la direction de son axe, et possédant au moins une surface extérieure avec une excentricité, **caractérisé en ce que** les surfaces extérieures sont essentiellement lisses, c'est-à-dire que ces surfaces sont dépourvues de nervures destinées à empêcher un mouvement rotatif du moyeu de roulement (1) par rapport à la cuve en plastique et que l'excentricité elle-même empêche la rotation du moyeu de roulement (1) par rapport à la cuve.

2. Moyeu de roulement (1) pour une machine à laver selon la revendication 1, **caractérisé en ce que** les surfaces extérieures du moyeu de roulement (1) sont essentiellement planes.

3. Moyeu de roulement (1) pour une machine à laver selon la revendication 1, **caractérisé en ce que** le moyeu de roulement (1) possède l'excentricité dans une partie centrale.

4. Moyeu de roulement (1) pour une machine à laver selon l'une quelconque des revendications précédentes, **caractérisé en ce que** l'excentricité est elliptique ou pyramidale.

5. Moyeu de roulement (1) pour une machine à laver selon l'une quelconque des revendications précédentes, **caractérisé en ce que** le moyeu de roulement (1) possède des bords très lisses au niveau de ses surfaces extérieures.

6. Moyeu de roulement (1) pour une machine à laver selon l'une quelconque des revendications précédentes, **caractérisé en ce que** le moyeu de roulement (1) est d'un alliage zamak.

7. Cuve en plastique pour une machine à laver, destinée à loger un tambour rotatif et comprenant un moyeu de roulement (1) selon l'une quelconque des revendications précédentes destiné au support de l'axe de rotation de tambour.

8. Machine à laver comprenant un moyeu de roulement (1) selon l'une quelconque des revendications 1 à 6.

9. Procédé de fabrication d'une cuve pour une machine à laver comprenant les étapes suivantes :
a. la fourniture d'un moyeu de roulement (1) selon l'une quelconque des revendications 1 à 6 dans un moule d'injection approprié, et
b. l'injection de plastique autour du moyeu de roulement (1) de façon à façonner la cuve.

10. Procédé de fabrication d'une cuve pour une machine à laver selon la revendication 9, qui comprend additionnellement la couverture du moyeu de roulement (1) avec un revêtement sur-mesure composé d'un premier plastique, l'injection de plastique autour du moyeu de roulement (1) de façon à façonner la cuve étant exécutée sur le moyeu de roulement (1) muni dudit revêtement, et ladite injection étant exécutée avec un deuxième plastique, le premier plastique étant d'une qualité supérieure à celle du deuxième plastique en termes de stabilité et de résistance.

11. Procédé de fabrication d'une cuve pour une machine à laver selon la revendication 10, dans lequel le revêtement est composé d'un plastique thermorétractable.

12. Procédé de fabrication d'une cuve pour une machine à laver selon la revendication 10, dans lequel le revêtement est fabriqué sous la forme d'une pièce moulée par injection d'un premier plastique qui comprend de la fibre de verre.

13. Procédé de fabrication d'une cuve pour une machine à laver selon les revendications 10 à 12, dans lequel le deuxième plastique comprend du talc.

14. Procédé de fabrication d'une cuve pour une machine à laver selon l'une quelconque des revendications 10 à 12, dans lequel une couche de matériau adhésif est appliquée entre le moyeu de roulement (1) et le revêtement.

15. Procédé de fabrication d'une cuve pour une machine à laver selon l'une quelconque des revendications 12 à 14, dans lequel le revêtement comprend un manchon avec deux parties (2', 2") raccordées de manière articulée et un moyen de couplage muni d'une nervure fine destinée au maintien des deux parties (2', 2") dans une position fermée, qui permet de loger le moyeu de roulement (1) dans son intérieur.
